# FASCICULE DE BREVET EUROPEEN

(11) **EP 2 405 753 B1**
(45) Date de publication et mention de la délivrance du brevet: **02.10.2013**
(21) Numéro de dépôt: 10710677.5
(22) Date de dépôt: 11.03.2010
(51) Int. Cl.: A01N 43/40, A01P 17/00, A01N 25/10, A01N 25/24

(54) **COMPOSITION RÉPULSIVE ANTI-INSECTES**
INSEKTABWEISENDE ZUSAMMENSETZUNG
INSECT-REPELLENT COMPOSITION

(30) Priorité: 13.03.2009 FR 0951590
(43) Date de publication de la demande: 18.01.2012
(73) Titulaire: Dakem, 92400 Courbevoie (FR)
(72) Inventeur: ESCULIER, Marc, 92200 Neuilly Sur Seine (FR)
(74) Mandataire: Le Coupanec, Pascale A.M.P.
(86) Numéro de dépôt international: PCT/IB2010/051050
(87) Numéro de publication internationale: WO 2010/103478

(56) Documents cités:
- WO-A-02/43489
- WO-A-02/43490
- WO-A-03/020232
- US-B1- 6 180 127

## Description

La présente invention a pour objet une composition répulsive anti-insectes piqueurs, notamment les moustiques.

I1 est connu de se protéger des insectes en appliquant sur la peau des actifs répulsifs. Toutefois, la plupart des solutions de protection corporelle contre les insectes piqueurs ont une durée d'efficacité limitée dans la mesure où celle-ci est souvent affectée par l'humidité de l'environnement. Par exemple, le fort taux d'humidité des zones tropicales, entraîne chez les individus une augmentation importante de la sudation qui a pour effet de provoquer une élimination prématurée de la composition anti-insecte appliquée à la surface de leur peau. De même, le contact direct de l'eau, par exemple au cours d'une baignade, avec une telle composition appliquée en surface de la peau, est également bien entendu préjudiciable.

Ce défaut de résistance à l'eau, manifesté par un grand nombre de compositions anti-insectes, requiert donc une vigilance du sujet traité, qui se doit d'appliquer une nouvelle couche de composition après tout contact prolongé avec de l'eau ou une sudation significative.

Pour pallier à ce défaut, il a été proposé l'emploi d'agents filmogènes, comme par exemple les copolymères de vinylpyrrolidone, pour augmenter la résistance à l'humidité de ces compositions anti-insectes.

La présente invention vise pour sa part à proposer une nouvelle composition anti-insectes cumulant de bonnes propriétés répulsives à l'égard des insectes et une résistance particulièrement accrue à l'égard de l'humidité.

Plus précisément, la présente invention propose une composition apportant une protection répulsive anti-insectes longue durée y compris en conditions climatiques extrêmes et/ou après des baignades de courte durée.

Les inventeurs ont ainsi découvert de manière surprenante que l'association d'un agent filmogène particulier et d'une matière active répulsive de dernière génération, telle que le 1-méthylpropyle (2-(2-hydroxyéthyl)piperidine-1-carboxylate, permet d'obtenir une telle composition.

L'agent filmogène considéré selon l'invention assure en effet efficacement la fixation de la matière active répulsive et empêche son élimination au contact de l'eau.

Un premier objet de l'invention est donc une composition répulsive anti-insectes comprenant, dans un milieu physiologiquement acceptable, à titre de matière active répulsive envers les insectes, au moins le 1-méthylpropyle (2-(2-hydroxyéthyl)piperidine-1-carboxylate, ledit actif étant mis en oeuvre avec au moins un copolymère de vinylpyrrolidone et d'un alkyle linéaire comprenant au moins 16 atomes de carbone.

Un second objet de l'invention est une méthode pour repousser les insectes vis-à-vis d'un support et plus particulièrement de la peau comprenant l'application sur ledit support d'une quantité efficace d'au moins une composition telle que définie dans la présente invention.

Ce support est avantageusement la peau, toutefois, il peut s'agir également d'un vêtement ou autre matériau textile destiné à assurer la protection de la peau contre les insectes.

Comme il ressort des exemples qui suivent le copolymère considéré selon l'invention à titre d'agent filmogène est avantageux à plusieurs titres.

Tout d'abord, des tests biologiques d'efficacité en conditions tropicales ont confirmé une efficacité de 8 heures sans aucune piqûre, à une composition l'associant à l'actif anti-insectes retenu selon l'invention. Ces résultats montrent donc que la mise en oeuvre de ce copolymère spécifique permet de garantir une résistance accrue à l'humidité de la formulation anti-insectes et donc confère à cette formulation un caractère « waterproof ». Ils démontrent également que ce filmogène spécifique n'affecte pas par ailleurs la réactivité du 1-méthylpropyle (2-(2-hydroxyéthyl)piperidine-1-carboxylate à l'égard des insectes. Ce dernier demeure efficace à des doses conventionnelles d'emploi.

Qui plus est, le copolymère considéré selon l'invention s'avère facile à formuler. Ainsi, il ne requiert pas une quantité excessive d'huile pour sa mise en oeuvre. En conséquence, il peut être formulé dans une émulsion aqueuse non grasse (sans effet gras, sans effet collant ou desséchant, sans taches). En outre, son élimination peut être obtenue facilement avec de l'eau savonneuse.

Enfin, ce copolymère est particulièrement intéressant sur le plan de l'innocuité et, à ce titre, est compatible avec une application sur la peau, voire les paupières et les lèvres.

Avantageusement, la composition selon l'invention se présente sous la forme d'une émulsion huile-dans-eau.

Plus particulièrement, cette composition manifeste une résistance à l'eau (« waterproof »).

### Matière active répulsive

La composition répulsive selon la présente invention, contient, à titre de matière active répulsive envers les insectes, au moins le 1-méthylpropyle (2-(2-hydroxyéthyl)piperidine-1-carboxylate ou un de ses sels.

Le 1-méthylpropyle (2-(2-hydroxyéthyl)piperidine-1-carboxylate est également connu sous le nom d'ICARIDIN. Il est actuellement commercialisé sous le nom de SALTIDIN par la société Saltigo.

Une composition selon l'invention peut avantageusement contenir 10 à 25 % et de préférence de 15 à 22 % en poids de 1-méthylpropyle (2-(2-hydroxyéthyl)piperidine-1-carboxylate par rapport à son poids total.

Bien entendu, une composition selon l'invention peut comprendre en outre une autre matière active additionnelle, notamment à effet répulsif. Celle-ci peut notamment être choisie parmi le N,N-diéthyl-3-méthylbenzamide (DEET), l'éthyle butylacétylaminopropionate (IR3535), la citronnelle ou encore le géraniol.

### Agent filmogène

La composition répulsive selon la présente invention, contient également au moins un copolymère de vinylpyrrolidone et d'un alcène linéaire comprenant au moins 16 atomes de carbone, à titre de polymère filmogène.

Plus précisément, le copolymère considéré selon l'invention est un copolymère de vinyl pyrrolidone et d'hexadecene.

Il peut notamment s'agir de l'Antaron V-216 commercialisé par ISP (International Specialty Products).

La composition peut avantageusement contenir de 0,1 à 15 % et de préférence de 1 à 10 % en poids de copolymères de vinylpyrrolidone et d'un alcène linéaire en C₁₆ par rapport à son poids total.

Pour des raisons évidentes, l'Icaridin et l'agent filmogène requis selon l'invention sont formulés au sein d'un milieu physiologiquement acceptable.

Ainsi, une composition selon l'invention comprend avantageusement à titre de milieu physiologiquement acceptable, un milieu aqueux et en particulier de l'eau, de préférence déminéralisée.

La composition selon l'invention comprend 2% de diméthicone.

Cette huile est intéressante sur le plan de la formulation. Elle confère aussi un caractère glissant appréciable à l'application aux formules les comprenant.

La composition se présente avantageusement sous la forme d'une émulsion, notamment huile dans eau.

Au regard de sa formulation de type émulsion, une composition selon l'invention comprend généralement avantageusement un ou plusieurs agents émulsifiants. Cet agent peut être choisi parmi les esters de saccharose, les esters gras de glycérol, les acides gras, les alcools gras éthoxylés et leurs mélanges.

La composition selon l'invention comprend un humectants, la glycérine.

De même, une composition selon l'invention comprend un émollient, le benzoate d'alkyle en C₁₂ à C₁₅.

La composition selon l'invention peut en outre comprendre un ou plusieurs agents gélifiants choisis parmi le palmitate de sucrose, le stéarate de glycéryle, le citrate de stéarate de glycéryle et leurs mélanges.

Selon une variante de réalisation une composition selon l'invention, peut en outre comprendre un actif anti-UV apte à lui conférer des propriétés protectrices à l'égard d'une exposition aux UV.

La composition selon l'invention peut en outre comprendre les additifs classiques dans le domaine, comme par exemple ceux choisis parmi la liste non exhaustive tels que les agents chélatants, les conservateurs, les régulateurs de pH, les parfums.

Comme précisé ci-dessus, la composition se présente avantageusement sous la forme d'une émulsion notamment huile dans eau. Cette composition peut se présenter sous la forme d'une crème, d'un lait ou d'un gel, applicable le cas échéant par pulvérisation.

La présente invention vise en outre l'utilisation d'une composition, selon l'invention, répulsive à l'égard des insectes. Plus précisément, elle vise une méthode pour repousser les insectes d'une peau comprenant l'application en quantité suffisante sur un support, tel que la peau, ou destiné à être mis en contact de celle-ci, d'une composition telle que définie selon la présente invention.

### Exemple 1 :

### Formulation topique selon l'invention

| **NOM COMMERCIAL** | **NOM INCI** | **FONCTION** | **% PONDERAL** |
|---|---|---|---|
| Saltidin (Icaridin) commercialisé par Saltigo | Hydroxyethyl isobutyl piperidine carboxylate | Actif anti-moustique | 20 |
| Antaron V 216 commercialisé par ISP (International Specialty Products) | VP/Hexadecene copolymer | Filmogène | 5 |
| DC 200 Fluid 100 CST | Dimethicone | Silicone | 2 |
| Tegosoft TN | C₁₂-₁₅Alkyl Benzoate | Émollient | 2 |
| Eau déminéralisée | Aqua | Solvant | Qsp |
| Glycérine | Glycerin | Emollient | 5 |
| Arlatone V 175 | Sucrose Palmitate, Glyceryl Stearate, Glyceryl Stearate Citrate, Sucrose Mannan, Xanthan Gum | Émulsifiant | 1,10 |
| Carbopol EDT 2050 | Carbomer | Agent gélifiant | 0,10 |
| Disodium EDTA | Disodium EDTA | Agent chélatant | 0,10 |
| Euxyl PE9010 | Phenoxyethanol, Ethylhexylglycerin | Conservateur | 0,80 |
| Triethanolamine | Triethanolamine | Régulateur de pH | 0,10 |
| Parfum Yakusa | Parfum | Parfum | 1,50 |

### Exemple 2 :

L'efficacité de la formulation de l'exemple 1 a été appréciée vis-à-vis des moustiques *Anopheles stephensi.*

En l'absence de norme française, la méthode suit les lignes directrices suivantes :
General Recommandations OMS : WHO/CDS/WHOPES/2001.2
ASTM (American Society for Testing and Materials) : ASTM E951-94 (labo)

Les essais sont effectués avec des femelles de moustiques élevées au laboratoire : *Anopheles stephensi* (souche ORSTOM).

Les femelles utilisées pour les essais sont âgées de 6 à 10 jours et ont subi un jeûne préalable de 24 heures (pas de repas de sang) afin d'augmenter leur agressivité.

La cible du repas de sang est une souris de type « hairless » (sans poils) maintenue dans une cage de contention (yeux protégés) et qui est enduite de produit à tester (0,1 g/60 cm²). Application par pipette.

30 minutes après application du produit, la souris est ensuite introduite dans une cage contenant environ 200 femelles (élimination préalable des mâles par gradient de nourriture).

L'essai dure 5 minutes et durant ce délai, on enregistre le nombre de moustiques qui se sont posés sur la souris (effet « landing »), puis le nombre de piqûres effectives (sauf si inefficacité manifeste).

L'essai est arrêté à partir de 5 piqûres effectives.

L'essai est recommencé avec de nouveaux lots de moustiques, après 2, 4, 6, 7, 8 et 9 heures après application selon la limite de persistance du produit (la souris est libérée entre-temps).

Le même essai est réalisé avec des souris n'ayant reçu aucun traitement afin de vérifier la tendance naturelle des moustiques à piquer. On vérifie qu'il y a au moins 10 « landings » et plus de 5 piqûres en 30 secondes pour valider l'essai.

L'essai est arrêté au bout de 5 piqûres (« stop ») dans le tableau des données figurant ci-dessous.

Les données de « landing » correspondent au nombre de moustiques se posant sur la zone traitée, mais qui repartent sans avoir piqué. Cette donnée peut renseigner sur la limite de persistance des produits car les moustiques s'approchent de plus en plus de la zone traitée jusqu'à ce que l'effet répulsif soit insuffisant et qu'il y ait piqûre effective.

Pendant et entre les échéances, les souris sont maintenues dans une atmosphère de type « tropicale » en conditions contrôlées à 27 ± 1 °C et 70 ± 5 % d'humidité relative.

Les cages sont changées à chaque essai unitaire et espacées de trois mètres.

Trois répétitions sont menées par formule à tester et ce sur trois souris différentes, soit neuf essais unitaires par formule.

Les résultats sont présentés dans le tableau I ci-après.

**Tableau I**

| **ANOPHELES STEPHENSI** | souris | rep. | T0+2H | | T0+4H | | T0+6H | | T0+7H | | T0+8H | | T0+SH | |
|---|---|---|---|---|---|---|---|---|---|---|---|---|---|---|
| | | | P | L | P | L | P | L | P | L | P | L | P | L |
| **Formulation Exemple 1** | 1 | 1 | 0 | 0 | 0 | 0 | 0 | 0 | 0 | 0 | 0 | 5 | stop | stop |
| | | 2 | 0 | 0 | 0 | 0 | 0 | 0 | 0 | 0 | 0 | 1 | stop | stop |
| | | 3 | 0 | 0 | 0 | 0 | 0 | 0 | 0 | 1 | 0 | 0 | stop | stop |
| | 2 | 1 | 0 | 0 | 0 | 0 | 0 | 0 | 0 | 0 | 0 | 2 | stop | stop |
| | | 2 | 0 | 0 | 0 | 0 | 0 | 0 | 0 | 0 | 0 | 3 | stop | stop |
| | | 3 | 0 | 0 | 0 | 0 | 0 | 0 | 0 | 0 | 0 | 2 | stop | stop |
| | 3 | 1 | 0 | 0 | 0 | 0 | 0 | 0 | 0 | 0 | 0 | 4 | stop | stop |
| | | 2 | 0 | 0 | 0 | 0 | 0 | 0 | 0 | 1 | 0 | 3 | stop | stop |
| | | 3 | 0 | 0 | 0 | 0 | 0 | 0 | 0 | 0 | 0 | 2 | stop | stop |
| test sans produit | 1 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 2 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |
| | 3 | 1 | stop | stop | stop | stop | stop | stop | stop | stop | stop | stop | stop | stop |
| | | 2 | stop | stop | stop | stop | stop | stop | stop | stop | stop | stop | stop | stop |
| | | 3 | stop | stop | stop | stop | stop | stop | stop | stop | stop | stop | stop | stop |

| | | | | | | | | | | | | | | |
|---|---|---|---|---|---|---|---|---|---|---|---|---|---|---|
| P: nombre de piqûres rep.: répétition L : "landing": nombre de moustiques se posent sans piquer sur la zone traitée stop ∝ l'essai est arrêté lorsque l'on observe plus de 5 piqûres | | | | | | | | | | | | | | |

Il peut être noté que dans les conditions de ces essais, avec les échantillons fournis, souches d'insectes et méthode considérés, la formule a montré un effet répulsif hautement significatif vis-à-vis de *Anopheles stephensi.* La persistance d'action est de 8 heures.

## Revendications

1. Composition répulsive anti-insectes comprenant, dans un milieu physiologiquement acceptable, à titre de matière active répulsive envers les insectes, au moins le 1-méthylpropyle (2-(2-hydroxyéthyl)piperidine-1-carboxylate, ledit actif étant mis en oeuvre en un milieu aqueux avec au moins un copolymère de vinylpyrrolidone et d'un alcène linéaire comprenant au moins 16 atomes de carbone et au moins une huile de silicone, **caractérisée en ce qu'**elle contient :
- 20 % en poids dudit 1-méthylpropyle (2-(2-hydroxyéthyl)piperidine-1-carboxylate,
- 5 % en poids d'un copolymère de vinylpyrrolidone et d'hexadécène à titre de copolymère de vinylpyrrolidone et d'un alcène linéaire comprenant au moins 16 atomes de carbone,
- 2 % en poids de diméthicone à titre d'huile de silicone,
- 2 % en poids de benzoate d'alkyle en C₁₂-C₁₅,
- 5 % en poids de glycérine,
- 1,1 % en poids d'émulsifiant,
- 0,1 % en poids de carbomère,
0,1 % en poids d'agent chélatant,
- 0,8 % en poids de conservateur,
- 0,1 % en poids régulateur de pH,
- 1,5 % en poids de parfum, et
- 62,3 % en poids d'eau.

2. Composition répulsive selon la revendication 1, **caractérisée en ce qu'**elle se présente sous la forme d'une émulsion huile dans eau.

3. Composition répulsive selon la revendication 1 ou 2, **caractérisée en ce qu'**elle présente une résistance à l'eau.

4. Composition répulsive selon l'une quelconque des revendications précédentes, se présentant sous la forme d'une crème, d'un lait ou d'un gel, applicable le cas échéant par pulvérisation.

5. Méthode pour repousser les insectes de la peau comprenant l'application en quantité suffisante sur un support, tel que la peau, ou destiné à être mis en contact de celle-ci, d'une composition telle que définie selon l'une quelconque des revendications 1 à 4.

## Patentansprüche

1. Insektenabweisende Zusammensetzung, welche in einem physiologisch akzeptablen Medium als aktives insektenabweisendes Material mindestens methyl-propyl(2-(2-hydroxyethyl)piperdin-1-carboxylat umfasst, wobei das aktive Mittel in einem wässerigen Milieu mit mindestem einem Copolymer aus Vinylpyrrolidon und einem linearen Alken, das mindestens 16 Kohlenstoffatome umfasst, und mindestens einem Siliconöl verwendet wird, **dadurch gekennzeichnet, dass** die Zusammensetzung enthält:
- 20 Gew.-% des 1-Methylpropyl(2-(2-hydroxyethyl)piperidin-1-carboxylats,
- 5 Gew.-% eines Copolymers aus Vinylpyrrolidon und Hexadecen als Copolymer aus Vinylpyrrolidon und einem linearen Alken, welches mindestens 16 Kohlenstoffatome utnfasst,
- 2 Gew.-% Dimethicon als Siliconöl,
- 2 Gew.-% Alkylbenzoat mit C₁₂-C₁₅,
- 5 Gew.-% Glyccrin,
- 1,1 Gew.-% eines Emulgators,
- 0,1 Gew.-% Carbomer,
- 0,1 Gew.-% Chelatbildner,
- 0,8 Gew.-% Konservierungsmittel,
- 0,1 Gew.-% pH-Regulator,
- 1,5 Gew.-% Duftstoff und
- 62,3 Gew.-% Wasser.

2. Abweisende Zusammensetzung nach anspruch 1, **dadurch gekennzeichnet, dass** sie in Form einer Öl-in-Wasser-Emulsion vorliegt.

3. Abweisende Zusammensetzung nach Anspruch 1 oder 2, **dadurch gekennzeichnet, dass** sie Wasserbeständigkeit aufweist.

4. Abweisende Zusammmsetzung nach einem der vorhergehenden Ansprüche, wobei diese in Form einer Creme, einer Milch oder eines Gels vorliegt und gegebenenfalls durch Zerstäubung anwendbar ist.

5. Verfahren zum Abweisen von Insekten von der Haut, umfassend das Aufbringen einer ausreichenden Menge einer Zusammensetzung wie in einem der Ansprüche 1 bis 4 definiert auf einen Träger, beispielsweise der Haut, oder einen solchen, der dazu bestimmt ist, mit dieser in Kontakt gebracht zu werden.

## Claims

1. An insect repellent composition comprising, in a physiologically acceptable medium, as active insect repellent material, at least 1-methylpropyl (2-(2-hydroxyethyl)piperidine-1-carboxylate, said active agent being used in an aqueous medium with at least one copolymer of vinylpyrrolidone and of a linear alkene containing at least 16 carbon atoms and at least one silicone oil, **characterized in that** it contains:
- 20% by weight of said 1-methylpropyl (2-(2-hydroxyethyl)piperidine-1-carboxylate,
- 5% by weight of a copolymer of vinylpyrrolidone and of hexadecane as copolymer of vinylpyrrolidone and of a linear alkene containing at least 16 carbon atoms,
- 2% by weight of dimethicone as silicone oil,
- 2% by weight of C₁₂-₁₅ alkyl benzoate,
- 5% by weight of glycerin,
- 1.1% by weight of emulsifier,
- 0.1% by weight of carbomer,
- 0.1% by weight of chelating agent,
- 0.8% by weight of preservative,
- 0.1% by weight of pH regulator,
- 1.5% by weight of fragrance, and
- 62.3% by weight of water.

2. The repellent composition as claimed in claim 1, **characterized in that** it is in the form of an oil-in-water emulsion.

3. The repellent composition as claimed in claim 1 or 2, **characterized in that** it is waterproof.

4. The repellent composition as claimed in any one of the preceding claims, provided in the form of a cream, a milk or a gel, which can be applied as appropriate by spraying.

5. A method for repelling insects from the skin, comprising the application of a sufficient amount of a composition as defined according to any one of claims 1 to 4 to a substrate, such as the skin, or a substrate intended to be brought into contact with said skin.
